# EUROPEAN PATENT SPECIFICATION

(11) **EP 3 793 027 B1**
(45) Date of publication and mention of the grant of the patent: **22.01.2025**
(21) Application number: 20189352.6
(22) Date of filing: 30.10.2015
(51) Int. Cl.: H01Q 1/48, H01Q 3/44, H01Q 21/24, H01Q 1/24, H01Q 19/10, H01Q 21/00, H01Q 21/26, H01Q 3/32, H01Q 1/36

(54) **ANTENNA SYSTEM**
ANTENNENSYSTEM
SYSTÈME D'ANTENNE

(43) Date of publication of application: 17.03.2021
(62) Divisional of application: 15907014.3
(73) Proprietor: HUAWEI TECHNOLOGIES CO., LTD., Shenzhen, Guangdong 518129 (CN)
(72) Inventor: Xiao, Weihong, Shenzhen, Guangdong 518129 (CN); Liao, Zhiqiang, Shenzhen, Guangdong 518129 (CN)
(74) Representative: Thun, Clemens

(56) References cited:
- US-A- 4 218 685
- US-A1- 2010 134 374
- US-A1- 2011 285 474
- US-A1- 2012 075 155
- US-A1- 2012 098 725
- US-A1- 2015 042 531

## Description

### TECHNICAL FIELD

The present invention relates to the field of communications technologies, and in particular, to an antenna system.

### BACKGROUND

Currently, a radome in a conventional base station antenna design system mainly includes three parts: a radiation array unit, a reflection panel used to define a direction, and a feeding system that is mounted on the reflection panel and provides an amplitude and a phase for the radiation array unit. The reflection panel is generally used as a carrier platform, and both the radiation array unit and the feeding network are connected to and mounted on the reflection panel.

For an antenna applied to a higher-order Multi Input Multi Output technical scenario, the conventional antenna structure form has a relatively complex structure design and requires more assembly hours, and an error is easily caused because many assembly components exist; therefore, consistency is also affected.

An existing design scheme provides a feeding system that includes an air microstrip, and in the feeding system, a reflection panel is used as a ground plane, which simplifies design to some extent. However, the air microstrip in this design scheme has obvious defects, that is, backward radiation is large, a voltage standing wave ratio is not stable, and being greater than a frequency band of 2GHz; higher requirements are imposed on production and assembly, and therefore, the air microstrip is difficult to use.

US 2015/042531 relates to an antenna structure. The antenna structure comprises a dual polarized radiating element, a triplate line and a connected relation between the dual polarized radiating element and the triplate line.

US 2012/098725 discloses an antenna radiator, wherein each element radiator includes a node, a first ring connected to the node and a second ring connected to the node and disposed inside of and coplanar with the first ring.

US 2012/075155 discloses an antenna assembly including a reflector, wherein the reflector includes a first ground plane, a second ground plane below and spaced apart from the reflector.

### SUMMARY

This application provides an antenna system according to appended claims 1 to 14, to simplify assembly of the antenna system and improve stability and consistency of the antenna system.

A strip line ground plane is used as a reflective surface of a radiating element, and therefore, no independent reflective surface needs to be disposed, so that a structure of an antenna system is simplified. In addition, radiation baluns are electrically connected to the strip line ground plane, and all of feeding inner cores of radiation arms that are in a same polarization direction in the radiating element are electrically connected to one inner conductor, that is, a strip line of a strip line feeding system feeds the radiation arms in the same polarization direction one by one. Therefore, a feeding manner of an array antenna can be optimized very conveniently, assembly time is greatly reduced, quantities of welding points and cables are reduced, and because of reduced quantities of welding points and cables, consistency and reliability of the antenna system are improved.

### BRIEF DESCRIPTION OF DRAWINGS

FIG 1 is a schematic diagram of a side cross section of a connection between a radiating element and a strip line in an antenna system according to an example;
FIG 2 is a schematic diagram of a side cross section of a connection between a radiating element and a strip line in an antenna system according to an embodiment of the present invention;
FIG 3 is a cross-sectional view of a side structure of a connection between a radiating element and a strip line in an antenna system according to another embodiment of the present invention;
FIG 4 is a schematic structural diagram of an antenna system according to an embodiment of the present invention;
FIG 5 is a schematic diagram of a connection between an inner conductor of a microstrip and a feeding inner core in an antenna system according to an embodiment of the present invention;
FIG 6 is a schematic diagram of a connection between a radiation balun and a strip line ground plane in an antenna system according to an embodiment of the present invention;
FIG 7 is a schematic structural diagram of a planar antenna according to an embodiment of the present invention; and
FIG 8 is a schematic structural diagram of a planar antenna according to another embodiment of the present invention.

### Reference signs in the drawings:

00-radiating element, 00a-radiation arm, 00a1-first polarized radiation arm
00a2-second polarized radiation arm, 00b-feeding inner core, 00b1-first feeding inner core
00b2-second feeding inner core, 00c-radiation balun, 01-strip line, 01a-strip line ground plane
01a1-first strip line ground plane, 01a2-second strip line ground plane, 01b-inner conductor
01b1-first inner conductor, 01b2-second inner conductor, 01c-hollow cavity
Old-first hollow cavity, 01c2-second hollow cavity, 21-strip line
201, 202, 203, ..., 20n-radiating elements, 201a1-first polarized radiation arm
201a2-second polarized radiation arm, 201b1-first feeding inner core
201b2-second feeding inner core, 201d1 and 201d2-electrical connection points
201e-electrical connection point, 21b1-first inner conductor, 21b2-second inner conductor
21c1-first hollow cavity, 21c2-second hollow cavity, 02-radome

### DESCRIPTION OF EMBODIMENTS

The following describes specific embodiments of the present invention in detail with reference to accompanying drawings. It should be understood that the specific implementation manners described herein are merely used to describe and explain the present invention but are not intended to limit the present invention.

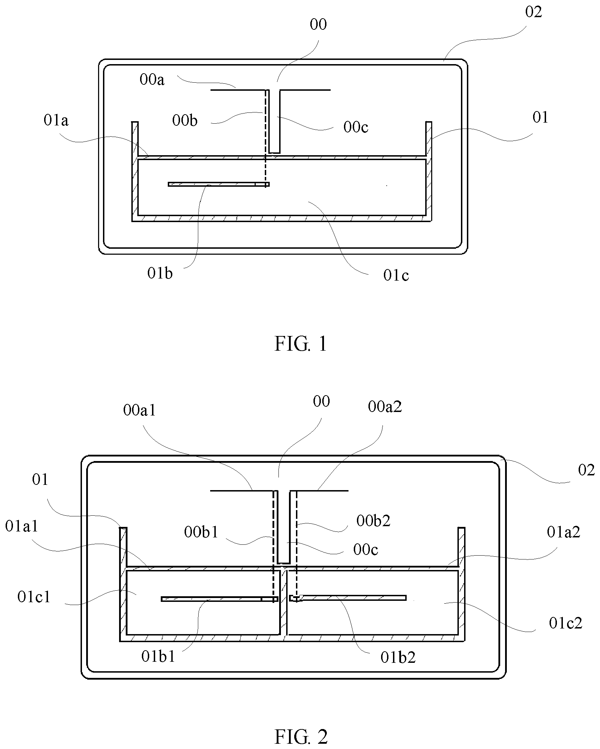

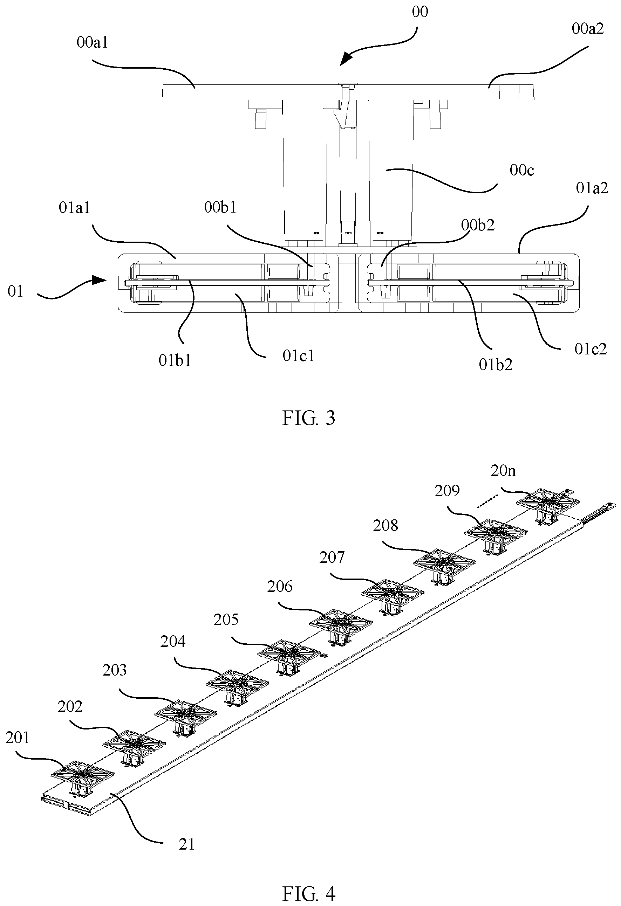

As shown in FIG 1, FIG 2, and FIG 4, FIG 1 is a schematic diagram of a side cross section of a connection between a radiating element and a strip line in an antenna system according to an example and embodiments of the present invention, FIG 2 is a schematic diagram of a side cross section of a connection between a radiating element and a strip line in an antenna system according to an embodiment of the present invention, and FIG 4 is a schematic structural diagram of an antenna system according to an embodiment of the present invention.

An embodiment of the present invention provides an antenna system, and the antenna system includes:
a radiating element 00, a strip line 01 that has a hollow cavity 01c, and an inner conductor 01b disposed in the hollow cavity 01c, where
the radiating element 00 includes: at least two radiation baluns 00c, radiation arms 00a that are in one-to-one correspondence with and are connected to the radiation baluns 00c, and feeding inner cores 00b that are in one-to-one correspondence with the radiation arms 00a; and
an upper wall of the strip line (01) is a strip line ground plane (01a), and the radiation baluns (00c) are fastened on the strip line ground plane 01a and are electrically connected to the strip line ground plane 01a; and radiation arms 00a that are in a same polarization direction in the radiating element 00 are corresponding to one inner conductor 01b, and the radiation arms 00a that are in the same polarization direction are electrically connected to the inner conductor 01b by using the corresponding feeding inner cores 00b.

In the foregoing embodiment, a strip line ground plane 01a is used as a reflective surface of a radiating element 00, and therefore, no independent reflective surface needs to be disposed, so that a structure of an antenna system is simplified. In addition, radiation baluns 00c are electrically connected to the strip line ground plane 01a, and all of feeding inner cores 00b of radiation arms 00a that are in a same polarization direction in the radiating element 00 are electrically connected to one inner conductor 01b, that is, a strip line 01 of a strip line feeding system feeds the radiation arms 00a in the same polarization direction one by one. Therefore, a feeding manner of an existing array antenna can be optimized very conveniently, and assembly time is greatly reduced. In a prior-art structure, feeding inner cores of each radiating element are corresponding to one inner conductor. By comparison, quantities of welding points and cables used to connect inner conductors are reduced, and therefore, consistency and reliability are improved.

To facilitate understanding of the embodiments of the present invention, the following describes in detail a structure of the antenna system with reference to specific embodiments.

As shown in FIG 1 and FIG 2, the antenna system provided in the embodiments may include a radome 02, where the radome 02 covers the strip line and the radiating element 00.

The radiating element in the antenna system provided in the embodiments is a dual-polarization radiating element, and the following describes the radiating element in detail with reference to specific embodiments.

### Example 1

As shown in FIG 1. FIG 1 is a schematic diagram of a side cross section of a connection between a radiating element and a strip line, and in this example, the radiating element is a single-polarization radiating element.

Specifically, as shown in FIG 1, a radiating element 00 includes radiation arms 00a in a same polarization direction, the radiation arm 00a is fastened on the top of a radiation balun 00c, and the radiation arm 00a is corresponding to a feeding inner core 00b that electrically feeds the radiation arm 00a, where the radiation arm 00a may be connected, in an electrical coupling manner or a welding manner, to the feeding inner core 00b corresponding to the radiation arm 00a for feeding. A strip line 01 has a hollow cavity 01c that is corresponding to the foregoing radiation arms 00a, and the strip line 01 has a strip line ground plane 01a that is corresponding to the radiation arms 00a in the same polarization direction. As shown in FIG 1, the strip line ground plane 01a is an upper sidewall of the hollow cavity 01c. An inner conductor 01b is disposed in the hollow cavity 01c, and the inner conductor 01b is suspendedly disposed in the hollow cavity. In a specific connection, radiation baluns 00c of the radiating element 00 are electrically connected to the strip line ground plane 01a, and feeding inner cores 00b are electrically connected to the inner conductor 01b.

A surface, of the strip line ground plane 01a, that faces the radiating element 00 is used as a reflective surface, and is used to reflect a radiation wave transmitted by the radiating element 00. Therefore, a structure of an antenna system is simplified, and no reflective structure that is used to reflect a radiation wave needs to be disposed independently. In specific disposing, the surface, of the strip line ground plane 01a, that faces the radiating element 00 is a flat surface or a convex arc surface, and the strip line ground plane 01a is made by metallic materials.

In addition, the inner conductor 01b provided in an embodiment is of a PCB structure or a metal strip line structure. In this embodiment, as another optional solution, a dielectric combination that can slide against the inner conductor 01b is disposed on the inner conductor 01b. When the dielectric combination slides against the inner conductor 01b, a transmission phase of the inner conductor 01b may be changed, so that an offset of a maximum direction of a radiation pattern of the antenna system is caused, so as to better serve mobile communications.

In addition, the hollow cavity 01c of the strip line 01 provided in an embodiment is a hollow cavity 01c with openings at two ends. When the inner conductor 01b is being disposed, the inner conductor 01b may directly penetrate into the hollow cavity 01c through an opening of the hollow cavity 01c, thereby facilitating disposing of the inner conductor 01b and improving entire antenna production efficiency.

For the antenna system provided in this embodiment, the radiating element 00 and the strip line 01 are covered by a protective cover, and in specific disposing, the protective cover covers the radiating element 00 and the strip line 01.

In specific disposing, there may be multiple radiating elements 00, each radiation balun 00c is electrically connected to the strip line ground plane 01a, and each feeding inner core 00b is electrically connected to the inner conductor 01b. Specifically, the multiple radiating elements 00 are arranged in a single row, and an orientation of the radiating elements 00 that are arranged in a single row is the same as a length direction of the hollow cavity 01c, that is, the multiple radiating elements 00 are arranged along the length direction of the hollow cavity 01c to form a row of radiating elements.

### Embodiment 1

As shown in FIG 2 and FIG 3, an antenna in an antenna system provided in this embodiment is a dual-polarization antenna, that is, a radiating element 00 has radiation arms in two polarization directions, where FIG 2 is a schematic diagram of a side cross section of the dual-polarization antenna, and FIG 3 is a cross-sectional view of a side structure of the dual-polarization antenna.

In this embodiment, the radiating element 00 is a dual-polarization radiating element, and the dual-polarization radiating element includes a radiation arm whose polarization direction is positive 45 degrees and a radiation arm whose polarization direction is negative 45 degrees. Two inner conductors are disposed in the hollow cavity, the radiation arm whose polarization direction is positive 45 degrees is electrically connected to one inner conductor by using a feeding inner core to which the radiation arm whose polarization direction is positive 45 degrees is connected, and the radiation arm whose polarization direction is negative 45 degrees is electrically connected to the other inner conductor by using a feeding inner core to which the radiation arm whose polarization direction is negative 45 degrees is connected.

In a specific connection, the radiation arm whose polarization direction is positive 45 degrees is a first polarized radiation arm 00a1, and the radiation arm whose polarization direction is negative 45 degrees is a second polarized radiation arm 00a2, where the first polarized radiation arm 00a1 is corresponding to a first feeding inner core 00b1, and the second polarized radiation arm 00a2 is corresponding to a second feeding inner core 00b2. The foregoing radiation arms may be connected, in an electrical coupling manner or a welding manner, to the feeding inner cores corresponding to the radiation arms for feeding. The foregoing radiation balun 00c has a cavity, and the feeding inner cores 00b1 and 00b2 are disposed in the cavity of the radiation balun 00c. A separator is disposed in the hollow cavity of a strip line 01, the separator divides the hollow cavity into two side-by-side cavities, and the two inner conductors are located in the two cavities respectively. The foregoing two cavities are respectively a first hollow cavity 01c1 and a second hollow cavity 01c2. An upper sidewall of the first hollow cavity 01c1 is a first strip line ground plane 01a1, and a first inner conductor 01b1 is disposed in the first hollow cavity 01c1. An upper sidewall of the second hollow cavity 01c2 is a second strip line ground plane 01a2, and a second inner conductor 01b2 is disposed in the second hollow cavity 01c2. For a specific connection manner, reference may be made to a connection manner of the radiating element 00 and the strip line 01 in Example 1, that is, the first polarized radiation arm 00a1 is fastened on a radiation balun 00c, the radiation balun 00c is electrically connected to the first strip line ground plane 01a1, and the first feeding inner core 00b1 is electrically connected to the first inner conductor 01b1; the second polarized radiation arm 00a2 is fastened on a radiation balun 00c, the radiation balun 00c is electrically connected to the second strip line ground plane 01a2, and the second feeding inner core 00b2 is connected to the second inner conductor 01b2. In addition, in specific disposing, the first strip line ground plane 01a1 and the second strip line ground plane 01a2 may be of an integrated structure.

In this embodiment, the two hollow cavities divided by the separator are arranged side by side. For each hollow cavity, structures of the hollow cavity, an inner conductor 01b, and a strip line ground plane 01a are similar to structures in the foregoing Example 1, and details are not described herein. In addition, when the first strip line ground plane 01a1 and the second strip line ground plane 01a2 are of an integrated structure, a surface, of the strip line ground plane 01a in the integrated structure, that faces the radiating element 00 is used as a reflective surface, and a shape of the surface is an arc or a planform.

To facilitate understanding of the antenna system provided in this embodiment, the following describes in detail the antenna system with reference to accompany drawings.

As shown in FIG 4, FIG 4 shows a structure of a dual-polarization antenna system according to an embodiment. In FIG 4, radiating elements in the antenna system are arranged in a single row, and the radiating elements are arranged along a length direction of a hollow cavity. The radiating elements included in the antenna system are 201, 202, 203, 204, 205, 206, 207, 208, 209, ..., 20n.

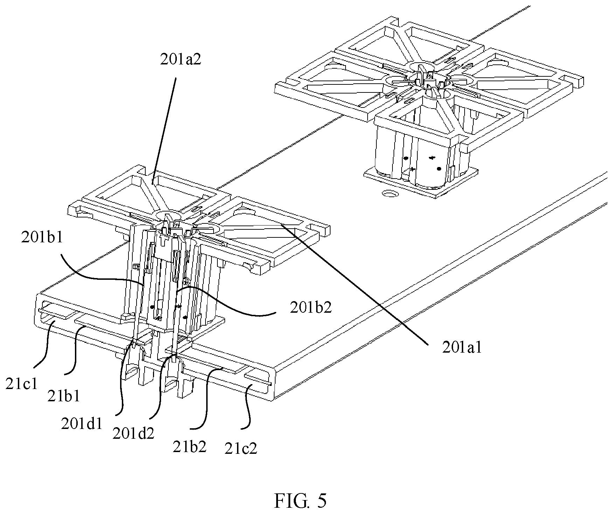

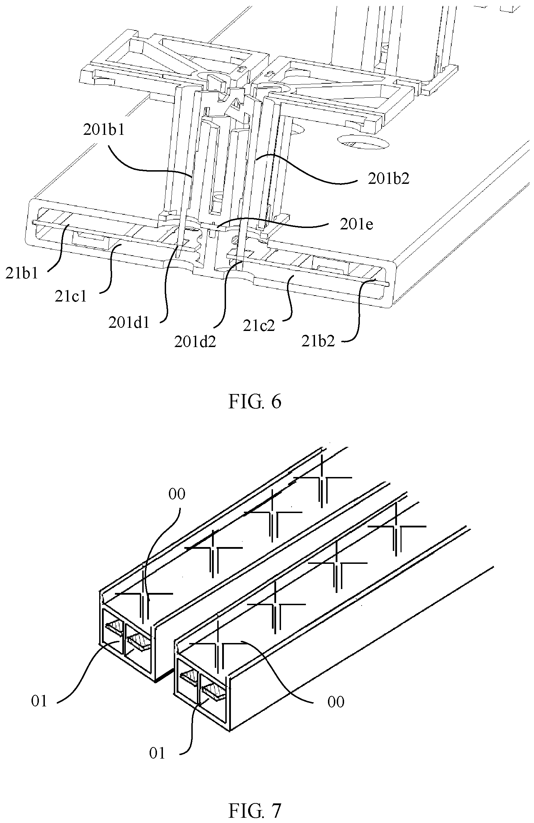

The radiating element 201 is used as an example; as shown in FIG 5, the radiating element 201 includes a first polarized radiation arm 201a1 and a second polarized radiation arm 201a2. A first feeding inner core 201b1 of the radiating element 201 is connected to a first inner conductor 21b1 in a first hollow cavity 21c1 of a strip line 21, and an electrical connection point 201d1 between the first feeding inner core 201b1 and the first inner conductor 21b1 is shown in FIG 5. A second feeding inner core 201b2 of the radiating element 201 is connected to a second inner conductor 21b2 in a second hollow cavity 21c2 of the strip line 21, and an electrical connection point 201d2 between the second feeding inner core 201b2 and the second inner conductor 21b2 is shown in FIG 5. In the foregoing specific connection, the feeding inner cores are connected to the inner conductors by means of welding, or the feeding inner cores are fixedly connected to the inner conductors by using a first connecting piece. Preferably, in this embodiment, a connection is established by using a connecting piece; during a specific connection, the connecting piece may be a bolt or a screw. An electrical connection point 201e between the radiation balun and the strip line ground plane is shown in FIG 6. In this embodiment, the radiation balun is electrically connected to the strip line ground plane by using a second connecting piece, where the second connecting piece is a bolt or a screw. Electrical connection points that are not shown in FIG 6 may further be 202e, ... 20ne, which are respectively and correspondingly used to electrically connect radiation baluns of radiation arms 201 to 20n and the strip line ground plane, and structures and connection manners of the electrical connection points are the same as those of the electrical connection point 201e of the radiating element 201.

In this embodiment, a separator is used to isolate the hollow cavity into two independent strip line cavities, so as to ensure that isolation indicators of two polarizations in a mobile communications system are met.

The antenna system shown in FIG 4 is an integrated array antenna system, includes a radiation array that includes n radiation arms whose polarization directions are positive or negative 45 degrees, and includes two electrically isolated strip lines, that is, two electrically isolated hollow cavities and inner conductors.

To better explain working principles, a signal in one strip line feeds radiation arms 201a1, 202a1, 203a1, ..., 20na1 of radiating elements by using an inner conductor, and the radiation arms 201a1, 202a1, 203a1, ..., 20na1 of the radiating elements together form a radiator, of the array antenna, whose polarization direction is positive 45 degrees.

A signal in the other strip line feeds radiation arms 201a2, 202a2, 203a2, ..., 20na2 of the radiating elements by using an inner conductor, and the radiation arms 201a2, 202a2, 203a2, ..., 20na2 of the radiating elements together form a radiator, of the array antenna, whose polarization direction is negative 45 degrees.

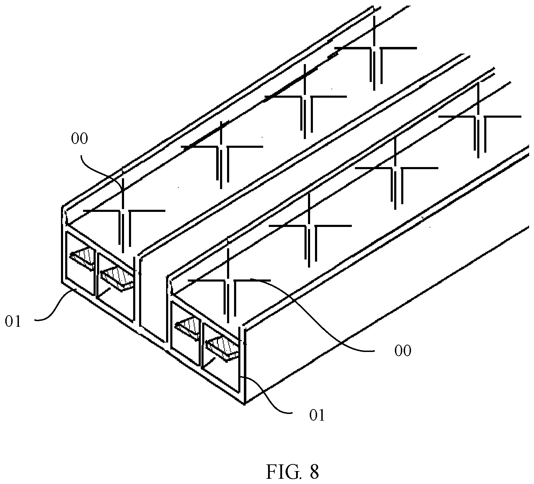

In specific disposing, there are multiple radiating elements, each radiation balun is electrically connected to a strip line ground plane, and each feeding inner core is electrically connected to an inner conductor. Specifically, the multiple radiating elements may be arranged in a single row, or arranged in an array manner, and an orientation of the single row of radiating elements is the same as a length direction of a hollow cavity. When strip lines are arranged in multiple columns, a planar antenna system is formed. Refer to FIG 7 and FIG 8 together, multiple strip lines may use independent structures, or use an integrated structure. As shown in FIG 7, strip lines in FIG 7 use independent structures, that is, strip lines of all columns of radiating elements are independent of each other. As shown in FIG 8, strip lines corresponding to multiple columns of radiating elements in FIG 8 are of an integrated structure, that is, strip lines corresponding to all columns of radiating elements are integrally connected.

The antenna system provided in all the embodiments of this application may be connected to a base station, and the base station receives information from a user or transmits information to a user by using the antenna system. The antenna system connects to and communicates with the base station by using a remote radio unit, and the base station may be a base transceiver station (Base Transceiver Station, "BTS" for short) in a Global System for Mobile Communications (Global System of Mobile communication, "GSM" for short) or Code Division Multiple Access (Code Division Multiple Access, "CDMA" for short) system, or may be a NodeB (NodeB, "NB" for short) in Wideband Code Division Multiple Access (Wideband Code Division Multiple Access, "WCDMA" for short), or may be an evolved NodeB (Evolutional Node B, "ENB" or "eNodeB" for short) in LTE; the base station may be a macro base station, or may be a small cell, which is not limited in the present invention. Obviously, a person skilled in the art can make various modifications and variations to the present invention without departing from the scope of the present invention. The present invention is intended to cover these modifications and variations provided that they fall within the scope of protection defined by the following claims.

## Claims

1. An antenna system, comprising:
a dual-polarization radiating element (00), and a strip line (01);
the dual-polarization radiating element (00) comprises: a radiation balun (00c), a first radiation arm (00a1) with a polarization direction of positive 45 degrees, a second radiation arm (00a2) with a polarization direction of negative 45 degrees, a first feeding inner core (00b1), and a second feeding inner core (00b2), wherein the first radiation arm (00a1) and the second radiation arm (00a2)are fastened on the radiation balun (00c), the first radiation arm (00a1) corresponds to the first feeding inner core (00b1), the second radiation arm (00a2) corresponds to the second feeding inner core (00b2);
the strip line (01) comprises: a strip line ground plane (01a1,01a2), a hollow cavity (01c), a first inner conductor (Olbl) disposed in the hollow cavity (01c), and a second inner conductor (01b2) disposed in the hollow cavity (01c);
the first radiation arm (00a1) is electrically connected to the first inner conductor (Olbl) by the first feeding inner core (00b1), the second radiation arm (00a2) is electrically connected to the second inner conductor (01b2) by the second feeding inner core (00b2), wherein the balun (00c) has a bottom surface which contacts the strip line ground plane (01a1,01a2), and the bottom surface of the radiation balun (00c) is fastened on the strip line ground plane (01a1, 01a2) by one first connecting piece (201e); wherein
the strip line ground plane (01a1,01a2) comprises a first strip line ground plane (01a1), and a second strip line ground plane (01a2); the hollow cavity (01c) is divided into a first hollow cavity (01c1) and a second hollow cavity (01c2); the first inner conductor (Olbl) is located in the first hollow cavity (01c1), an upper sidewall of the first hollow cavity (01c1) is the first strip line ground plane (01a1); the second inner conductor (01b2) is located in the second hollow cavity (01c2), an upper sidewall of the second hollow cavity (01c2) is the second strip line ground plane (01a2); and wherein
the first connecting piece (201e) is located between the first strip line ground plane (01a1) and the second strip line ground plane (01a2).

2. The antenna system according to claim 1, wherein the one first connecting piece (201e) is set at a center area of the bottom surface of the radiation balun (00c).

3. The antenna system according to anyone of claims 1 to 2, wherein a surface, of the strip line ground plane (01a1, 01a2), that faces the radiating element (00) is a flat surface or a convex arc surface.

4. The antenna system according to any one of claims 1 to 3, wherein the first feeding inner core (00b1) is connected to the first inner conductor (Olbl) by welding, and the second feeding inner core (00b2) is connected to the second inner conductor (01b2) by welding.

5. The antenna system according to any one of claims 1 to 3, wherein the first feeding inner core (00b1) is connected to the first inner conductor (Olbl) by a second connecting piece, and the second feeding inner core (00b2) is connected to the second inner conductor (01b2) by a third connecting piece.

6. The antenna system according to claim 5, wherein the second connecting piece and the third connecting piece are bolts or screws.

7. The antenna system according to any one of claims 1 to 6, wherein the one first connecting piece (201e) is a bolt or a screw.

8. The antenna system according to any one of claims 1 to 7, wherein the hollow cavity (01c) has openings at two ends.

9. The antenna system according to any one of claims 1 to 8, wherein the strip line ground plane (01a1, 01a2) is made of metallic material.

10. The antenna system according to any one of claims 1 to 9, wherein the radiation balun (00c) has a first cavity in which first feeding inner core (00b1) is disposed, and a second cavity in which second feeding inner core (00b2) is disposed.

11. The antenna system according to any one of claims 1 to 10, wherein the antenna system comprises a row of multiple dual-polarization radiating elements (00), and the row corresponds to the strip line (01).

12. The antenna system according to any one of claims 1 to 10, wherein the antenna system comprises multiple rows of multiple dual-polarization radiating elements (00) and multiple strip lines (01), wherein each row corresponds to one strip line (01).

13. The antenna system according to claim 12, wherein multiple strip lines (01) respectively corresponding to multiple rows are in an integrated structure.

14. The antenna system according to any one of claims 1 to 13, further comprising: a radome (02), wherein the radome (02) covers the strip line (01) and the radiating element (00).

## Patentansprüche

1. Antennensystem, das umfasst:
ein Dualpolarisations-Strahlungselement (00) und eine Streifenleitung (01);
wobei das Dualpolarisations-Strahlungselement (00) umfasst: einen Strahlungsbalun (00c), einen ersten Strahlungsarm (00a1) mit einer Polarisationsrichtung von positiv 45 Grad, einen zweiten Strahlungsarm (00a2) mit einer Polarisationsrichtung von negativ 45 Grad, einen ersten speisenden Innenkern (00b1) und einen zweiten speisenden Innenkern (00b2), wobei der erste Strahlungsarm (00a1) und der zweite Strahlungsarm (00a2) an dem Strahlungsbalun (00c) befestigt sind, der erste Strahlungsarm (00a1) dem ersten speisenden Innenkern (00b1) entspricht, der zweite Strahlungsarm (00a2) dem zweiten speisenden Innenkern (00b2) entspricht;
die Streifenleitung (01) umfasst: eine Streifenleitungs-Masseebene (01a1, 01a2), einen Hohlraum (01c), einen ersten Innenleiter (01b1), der in dem Hohlraum (01c) angeordnet ist, und einen zweiten Innenleiter (01b2), der in dem Hohlraum (01c) angeordnet ist;
der erste Strahlungsarm (00a1) durch den ersten speisenden Innenkern (00b1) mit dem ersten Innenleiter (01b1) elektrisch verbunden ist, der zweite Strahlungsarm (00a2) durch den zweiten speisenden Innenkern (00b2) mit dem zweiten Innenleiter (01b2) elektrisch verbunden ist, wobei der Balun (00c) eine Bodenoberfläche aufweist, die die Streifenleitungs-Masseebene (01a1, 01a2) berührt, und die Bodenoberfläche des Strahlungsbaluns (00c) an der Streifenleitungs-Masseebene (01a1, 01a2) durch ein erstes Verbindungsstück (201e) befestigt ist; wobei die Streifenleitungs-Masseebene (01a1, 01a2) eine erste Streifenleitungs-Masseebene (01a1) und eine zweite Streifenleitungs-Masseebene (01a2) umfasst; der Hohlraum (01c) in einen ersten Hohlraum (01c1) und einen zweiten Hohlraum (01c2) unterteilt ist; sich der erste Innenleiter (01b1) in dem ersten Hohlraum (01c1) befindet, eine obere Seitenwand des ersten Hohlraums (01c1) die erste Streifenleitungs-Masseebene (01a1) ist; sich der zweite Innenleiter (01b2) in dem zweiten Hohlraum (01c2) befindet, eine obere Seitenwand des zweiten Hohlraums (01c2) die zweite Streifenleitungs-Masseebene (01a2) ist; und wobei
sich das erste Verbindungsstück (201e) zwischen der ersten Streifenleitungs-Masseebene (01a1) und der zweiten Streifenleitungs-Masseebene (01a2) befindet.

2. Antennensystem nach Anspruch 1, wobei das erste Verbindungsstück (201e) in einem Mittelbereich der Bodenoberfläche des Strahlungsbaluns (00c) eingerichtet ist.

3. Antennensystem nach einem der Ansprüche 1 bis 2, wobei eine Oberfläche der Streifenleitungs-Masseebene (01a1, 01a2), die dem Strahlungselement (00) zugewandt ist, eine ebene Oberfläche oder eine konvexe bogenförmige Oberfläche ist.

4. Antennensystem nach einem der Ansprüche 1 bis 3, wobei der erste speisende Innenkern (00b1) mit dem ersten Innenleiter (01b1) durch Schweißen verbunden ist und der zweite speisende Innenkern (00b2) mit dem zweiten Innenleiter (01b2) durch Schweißen verbunden ist.

5. Antennensystem nach einem der Ansprüche 1 bis 3, wobei der erste speisende Innenkern (00b1) mit dem ersten Innenleiter (01b1) durch ein zweites Verbindungsstück verbunden ist und der zweite speisende Innenkern (00b2) mit dem zweiten Innenleiter (01b2) durch ein drittes Verbindungsstück verbunden ist.

6. Antennensystem nach Anspruch 5, wobei das zweite Verbindungsstück und das dritte Verbindungsstück Bolzen oder Schrauben sind.

7. Antennensystem nach einem der Ansprüche 1 bis 6, wobei das eine erste Verbindungsstück (201e) ein Bolzen oder eine Schraube ist.

8. Antennensystem nach einem der Ansprüche 1 bis 7, wobei der Hohlraum (01c) Öffnungen an zwei Enden aufweist.

9. Antennensystem nach einem der Ansprüche 1 bis 8, wobei die Streifenleitungs-Masseebene (01a1, 01a2) aus metallischem Material hergestellt ist.

10. Antennensystem nach einem der Ansprüche 1 bis 9, wobei der Strahlungsbalun (00c) einen ersten Hohlraum, in dem der erste speisende Innenkern (00b1) angeordnet ist, und einen zweiten Hohlraum, in dem der zweite speisende Innenkern (00b2) angeordnet ist, aufweist.

11. Antennensystem nach einem der Ansprüche 1 bis 10, wobei das Antennensystem eine Reihe von mehreren Dualpolarisations-Strahlungselementen (00) umfasst, und die Reihe der Streifenleitung (01) entspricht.

12. Antennensystem nach einem der Ansprüche 1 bis 10, wobei das Antennensystem mehrere Reihen von mehreren Dualpolarisations-Strahlungselementen (00) und mehrere Streifenleitungen (01) umfasst, wobei jede Reihe einer Streifenleitung (01) entspricht.

13. Antennensystem nach Anspruch 12, wobei mehrere Streifenleitungen (01), die jeweils mehreren Reihen entsprechen, in einer integrierten Struktur sind.

14. Antennensystem nach einem der Ansprüche 1 bis 13, das ferner umfasst: ein Radom (02), wobei das Radom (02) die Streifenleitung (01) und das Strahlungselement (00) abdeckt.

## Revendications

1. Système d'antenne, comprenant :
un élément rayonnant à double polarisation (00), et une ligne de bande (01) ;
l'élément rayonnant à double polarisation (00) comprend : un symétriseur de rayonnement (00c), un premier bras de rayonnement (00a1) avec une direction de polarisation positive de 45 degrés, un second bras de rayonnement (00a2) avec une direction de polarisation négative de 45 degrés, un premier noyau intérieur d'alimentation (00b1), et un second noyau intérieur d'alimentation (00b2), dans lequel le premier bras de rayonnement (00a1) et le second bras de rayonnement (00a2) sont fixés sur le symétriseur de rayonnement (00c), le premier bras de rayonnement (00a1) correspond au premier noyau intérieur d'alimentation (00b1), le second bras de rayonnement (00a2) correspond au second noyau intérieur d'alimentation (00b2) ;
la ligne de bande (01) comprend : un plan de masse de ligne de bande (01a1, 01a2), une cavité creuse (01c), un premier conducteur intérieur (01b1) disposé dans la cavité creuse (01c) et un second conducteur intérieur (01b2) disposé dans la cavité creuse (01c) ;
le premier bras de rayonnement (00a1) est connecté électriquement au premier conducteur intérieur (01b1) par le premier noyau intérieur d'alimentation (00b1), le second bras de rayonnement (00a2) est connecté électriquement au second conducteur intérieur (01b2) par le second noyau intérieur d'alimentation (00b2), dans lequel le symétriseur (00c) a une surface inférieure qui entre en contact avec le plan de masse de ligne de bande (01a1, 01a2), et la surface inférieure du symétriseur de rayonnement (00c) est fixée sur le plan de masse de la ligne de bande (01a1, 01a2) par une première pièce de liaison (201e) ; dans lequel
le plan de masse de ligne de bande (01a1, 01a2) comprend un premier plan de masse de ligne de bande (01a1), et un second plan de masse de ligne de bande (01a2) ; la cavité creuse (01c) est divisée en une première cavité creuse (01c1) et une seconde cavité creuse (01c2) ; le premier conducteur intérieur (01b1) est situé dans la première cavité creuse (01c1), une paroi latérale supérieure de la première cavité creuse (01c1) est le premier plan de masse de ligne de bande (01a1) ; le second conducteur intérieur (01b2) est situé dans la seconde cavité creuse (01c2), une paroi latérale supérieure de la seconde cavité creuse (01c2) est le second plan de masse de ligne de bande (01a2) ; et dans lequel la première pièce de liaison (201e) est située entre le premier plan de masse de ligne de bande (01a1) et le second plan de masse de ligne de bande (01a2).

2. Système d'antenne selon la revendication 1, dans lequel la première pièce de liaison (201e) est placée dans une zone centrale de la surface inférieure du symétriseur de rayonnement (00c).

3. Système d'antenne selon l'une quelconque des revendications 1 à 2, dans lequel une surface, du plan de masse de ligne de bande (01a1, 01a2), qui fait face à l'élément rayonnant (00) est une surface plane ou une surface convexe en arc.

4. Système d'antenne selon l'une quelconque des revendications 1 à 3, dans lequel le premier noyau intérieur d'alimentation (00b1) est connecté au premier conducteur intérieur (01b1) par soudage, et le second noyau intérieur d'alimentation (00b2) est connecté au second conducteur intérieur (01b2) par soudage.

5. Système d'antenne selon l'une quelconque des revendications 1 à 3, dans lequel le premier noyau intérieur d'alimentation (00b1) est connecté au premier conducteur intérieur (01b1) par une deuxième pièce de liaison, et le second noyau intérieur d'alimentation (00b2) est connecté au second conducteur intérieur (01b2) par une troisième pièce de liaison.

6. Système d'antenne selon la revendication 5, dans lequel la deuxième pièce de liaison et la troisième pièce de liaison sont des boulons ou des vis.

7. Système d'antenne selon l'une quelconque des revendications 1 à 6, dans lequel la première pièce de liaison (201e) est un boulon ou une vis.

8. Système d'antenne selon l'une quelconque des revendications 1 à 7, dans lequel la cavité creuse (01c) présente des ouvertures à deux extrémités.

9. Système d'antenne selon l'une quelconque des revendications 1 à 8, dans lequel le plan de masse de ligne de bande (01a1, 01a2) est fait d'un matériau métallique.

10. Système d'antenne selon l'une quelconque des revendications 1 à 9, dans lequel le symétriseur de rayonnement (00c) a une première cavité dans laquelle le premier noyau intérieur d'alimentation (00b1) est disposé, et une seconde cavité dans laquelle le second noyau intérieur d'alimentation (00b2) est disposé.

11. Système d'antenne selon l'une quelconque des revendications 1 à 10, dans lequel le système d'antenne comprend une rangée de plusieurs éléments rayonnants à double polarisation (00), et la rangée correspond à la ligne de bande (01).

12. Système d'antenne selon l'une quelconque des revendications 1 à 10, dans lequel le système d'antenne comprend plusieurs rangées d'éléments rayonnants à double polarisation (00) et plusieurs lignes de bande (01), dans lequel chaque rangée correspond à une ligne de bande (01).

13. Système d'antenne selon la revendication 12, dans lequel plusieurs lignes de bande (01) correspondant respectivement à plusieurs rangées sont dans une structure intégrée.

14. Système d'antenne selon l'une quelconque des revendications 1 à 13, comprenant en outre : un radôme (02), dans lequel le radôme (02) couvre la ligne de bande (01) et l'élément rayonnant (00).
